# EUROPEAN PATENT SPECIFICATION

(11) **EP 3 502 807 B1**
(45) Date of publication and mention of the grant of the patent: **01.12.2021**
(21) Application number: 16912890.7
(22) Date of filing: 07.09.2016
(51) Int. Cl.: G05B 15/02, G06F 3/16, G06F 40/205, G06F 40/30

(54) **METHOD AND APPARATUS FOR ASSISTING HUMAN-COMPUTER INTERACTION**
VERFAHREN UND VORRICHTUNG ZUR UNTERSTÜTZUNG EINER MENSCH-MASCHINE-INTERAKTION
PROCÉDÉ ET APPAREIL D'AIDE À L'INTERACTION PERSONNE-ORDINATEUR

(30) Priority: 18.08.2016 CN 201610682959
(43) Date of publication of application: 26.06.2019
(73) Proprietor: Beijing VRV Software Corporation Limited, Beijing 100081 (CN)
(72) Inventor: LIN, Hao, Beijing 100081 (CN); ZHONG, Li, Beijing 100081 (CN)
(74) Representative: Kolster Oy Ab
(86) International application number: PCT/CN2016/000512
(87) International publication number: WO 2018/032126

(56) References cited:
- CN-A- 103 197 571
- CN-A- 103 578 472
- CN-A- 105 202 706
- CN-A- 105 511 287
- CN-A- 105 632 494
- US-A1- 2013 218 572
- US-A1- 2014 330 435
- US-A1- 2015 162 006
- US-A1- 2015 228 281

## Description

### Technical Field

The present disclosure relates to the field of information technology and the Internet of Things (loT), and in particular to a method and apparatus for assisting human-computer (man-machine) interaction.

### Background Art

With the rapid development of the mobile Internet, the Internet of Things, and the artificial intelligence technology, more and more intelligence executing devices have the function of receiving digitalized control information, and parsing instructions of users, by receiving information such as voice or text and the like sent by the users, so as to carry out corresponding actions.

At present, the executing device can only understand some control instructions of standard forms, and when the control instruction issued by the user is an instruction of a non-standard form (e.g., "It is kind hot, turn on the air conditioner at 26°C"), or a voice instruction of a non-standard pronunciation (e.g., a voice instruction issued in a local dialect), the executing device will not be able to parse the instruction issued by the user, and cannot execute an action required by the user in time.

In the prior solutions, the user is alternatively required to issue an instruction of a standard form, so that it can be parsed by the executing device, thus, the user has to remember different instruction forms and use a standard pronunciation, which is very inconvenient in use, and reduces the user experience; or the device manufacturers are alternatively required to improve the intelligence level of the executing devices, and improve the capability of the executing devices to understand control instructions of non-standard forms, thus it is necessary to increase a large amount of capital investment to improve the executing devices. US2015162006A1 discloses a voice-recognition home automation for speaker-dependent commands; US2014330435A1 discloses devices and methods for interacting with a control system that is connected to a network; and US2013218572A1 discloses a method and an apparatus for smart voice recognition.

Therefore, how to provide an economic and effective method to assist the executing device in parsing the control instruction issued by the user, has become an urgent problem to be solved by those skilled in the art.

### Summary

In order to overcome the above-mentioned shortcomings in the prior art, the technical problem to be solved by the present disclosure is to provide a method and apparatus for assisting human-computer interaction, which are independent from an executing device and capable of assisting the executing device in parsing a control instruction issued by a user.

Regarding to the method, the present disclosure provides a method according to claim 1.

Further, in the method for assisting human-computer interaction described above, the step of generating a corresponding second control instruction based on the first control instruction comprises:
acquiring a key field in the first control instruction, the key field includes a target executing device, an action to be executed, and an execution parameter;
generating the second control instruction based on the key field.

Regarding to the apparatus, the present disclosure provides an apparatus for assisting human-computer interaction according to claim 3.

Compared with the prior art, the present disclosure has the following beneficial effects:
In a method and apparatus for assisting human-computer interaction according to the present disclosure, a human-computer interaction assisting device, independent from the executing device, is disposed, such that the first control instruction that cannot be understood by the executing device is parsed by the human-computer interaction assisting device, and a second control instruction that can be understood by the executing device is generated and sent to the executing device. In this way, an effect of assisting the executing device in parsing an instruction issued by a user is achieved without increasing investment in improving an information receiving interface or intelligence level of the executing device. The method of the present disclosure is simple and easily feasible, effectively saves the cost, and improves the user experience.

### Brief Description of Drawings

In order to more clearly illustrate technical solutions of embodiments of the present disclosure, drawings required for use in the embodiments will be introduced briefly below, it is to be understood that the drawings below are merely illustrative of some embodiments of the present disclosure, and therefore should not be considered as limiting the scope of the disclosure, it would be understood by those of ordinary skill in the art that other relevant drawings could also be obtained from these drawings without any inventive effort.
FIG. 1 is a schematic diagram of an application environment according to an embodiment of the present disclosure;
FIG. 2 is a structural block diagram of a human-computer interaction assisting device according to an embodiment of the present disclosure;
FIG. 3 is a first schematic flowchart of a method for assisting human-computer interaction according to an embodiment of the present disclosure;
FIG. 4 is a first schematic flowchart of sub-steps of step S110 of the present disclosure;
FIG. 5 is a second schematic flowchart of sub-steps of the step S110 of the present disclosure;
FIG. 6 is a second schematic flowchart of a method for assisting human-computer interaction according to an embodiment of the present disclosure;
FIG. 7 is a schematic flowchart of sub-steps of step S140 of the present disclosure;
FIG. 8 is a third schematic flowchart of a method for assisting human-computer interaction according to an embodiment of the present disclosure;
FIG. 9 is a first schematic flowchart of sub-steps of step S210 of the present disclosure;
FIG. 10 is a second schematic flowchart of sub-steps of the step S210 of the present disclosure;
FIG. 11 is a fourth schematic flowchart of a method for assisting human-computer interaction according to an embodiment of the present disclosure; and
FIG. 12 is a structural block diagram of a human-computer interaction assisting apparatus according to an embodiment of the present disclosure.

Reference numerals in the above figures are corresponding to the following terms:

| | |
|---|---|
| Human-computer interaction assisting device | 100 |
| Human-computer interaction assisting apparatus | 110 |
| First control instruction acquisition module | 111 |
| Parsing module | 112 |
| Second control instruction generating module | 113 |
| Second control instruction sending module | 114 |
| Memory | 120 |
| Processor | 130 |
| Communication unit | 140 |
| Executing Device | 200 |
| Network | 300 |

### Detailed Description of Embodiments

In order to make the objects, technical solutions, and advantages of the embodiments of the present disclosure more clear, the technical solutions of the embodiments of the present disclosure will be described below clearly and completely with reference to the drawings of the embodiments of the present disclosure. It is apparent that the embodiments to be described are some, but not all of the embodiments of the present disclosure. Generally, the components of the embodiments of the present disclosure, as described and illustrated in the figures herein, may be arranged and designed in a wide variety of different configurations.

Thus, the following detailed description of the embodiments of the present disclosure, as represented in the figures, is not intended to limit the scope of the present disclosure as claimed, but is merely representative of selected embodiments of the present disclosure. All the other embodiments obtained by those of ordinary skill in the art in light of the embodiments of the present disclosure without inventive efforts, and falling within the scope of the appended set of claims, would fall within the scope of the present disclosure as claimed.

It should be noted that similar reference numerals and letters refer to similar items in the following figures, and thus once an item is defined in one figure, it may not be further defined or explained in the following figures.

In the description of the present disclosure, it should be noted that terms such as "first", "second", and "third" are used for distinguishing the description, and should not be understood as an indication or implication of relative importance.

In the description of the present disclosure, it should also be noted that terms "provided", "mounted", "coupled", and "connected" should be understood broadly unless otherwise expressly specified or defined. For example, connection may be fixed connection or detachable connection or integral connection, may be mechanical connection or electric connection, or may be direct coupling or indirect coupling via an intermediate medium or internal communication between two elements. The specific meanings of the above-mentioned terms in the present disclosure could be understood by those of ordinary skill in the art according to specific situations.

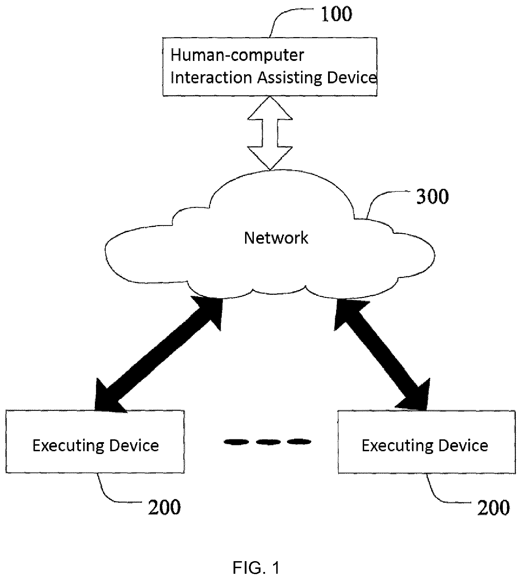

FIG. 1 shows a schematic diagram showing an interaction of communication between a human-computer interaction assisting device 100 and at least one executing device 200 according to a preferable embodiment of the present disclosure. The human-computer interaction assisting device 100 communicates with the executing device 200 through a network 300, to implement data communication or interaction between the human-computer interaction assisting device 100 and the executing device 200. The network 300 may be, but is not limited to, a wired network or a wireless network. The network 300 may be, but is not limited to, a local area network or the Internet.

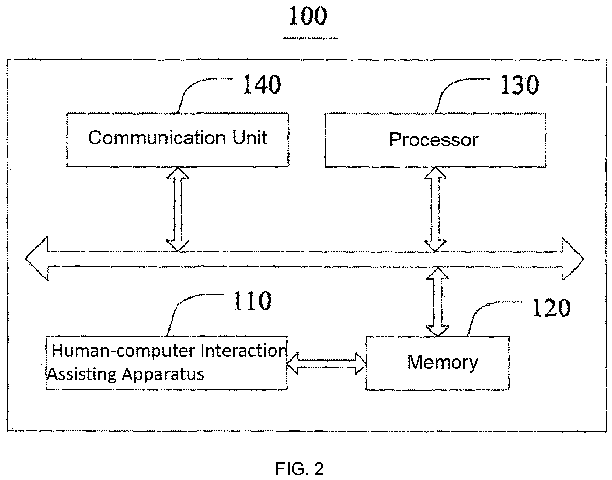

FIG. 2 shows a schematic block diagram of a human-computer interaction assisting device 100 shown in FIG. 1. The human-computer interaction assisting device 100 comprises a human-computer interaction assisting apparatus 110, a memory 120, a processor 130, and a communication unit 140.

The elements of the memory 120, the processor 130, and the communication unit 140 are electrically connected directly or indirectly to each other, to implement data transmission or interaction. For example, these elements may be electrically connected to each other via one or more communication buses or signal lines. The human-computer interaction assisting apparatus 110 includes at least one software functional module that may be stored in the memory 120 in the form of software or firmware, or solidified in an operating system (OS) of the human-computer interaction assisting device 100. The processor 130 is configured to execute an executable module stored in the memory 120, such as a software functional module, a computer program, and so on, included in the human-computer interaction assisting apparatus 110.

Here, the memory 120 may be, but is not limited to, a random access memory (RAM), a read only memory (ROM), a programmable read-only memory (PROM), an erasable programmable read-only memory (EPROM), an electric erasable programmable read-only memory (EEPROM), or the like. Here, the memory 120 is configured to store a program, and the processor 130 executes the program after receiving an execution instruction. The communication unit 140 is configured to establish a communication connection between the human-computer interaction assisting device 100 and the executing device 200 through the network 300, and is configured to send and receive data through the network 300.

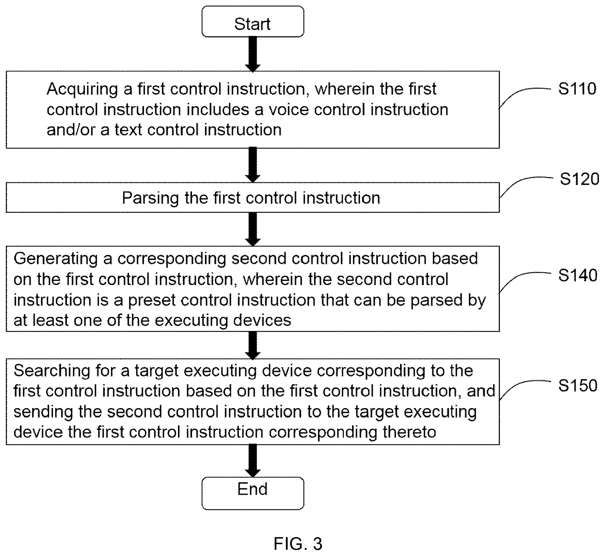

FIG. 3 shows a schematic flowchart of a method for assisting human-computer interaction which is applied to a human-computer interaction assisting device 100 shown in FIG. 1, the method comprises the following steps.

In step S110, the human-computer interaction assisting device 100 acquires a first control instruction, wherein the first control instruction includes a voice control instruction and/or a text control instruction.

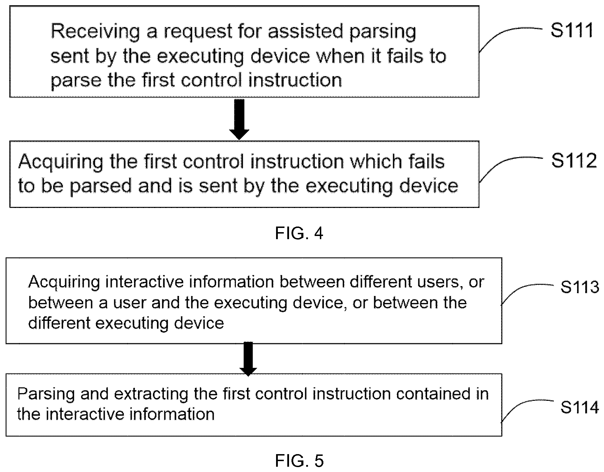

Specifically, referring to FIG. 4, in a first example of the present embodiment which is not necessarily covered by the claims, the step S110 comprises the following sub-steps:
in sub-step S111, a request, for assisted parsing sent by the executing device 200 when it fails to parse the first control instruction, is received.

In this example, the executing device 200 receives the first control instruction sent by a user, wherein the user sends the first control instruction by means of sending a voice instruction directly to the executing device 200, or sending a voice or text instruction to the executing device 200 through a user terminal. When the executing device 200 fails to parse the first control instruction, a request for assisted parsing is sent to the human-computer interaction assisting device 100.

In sub-step S112, the first control instruction, which fails to be parsed and is sent by the executing device 200, is acquired.

After receiving the request for assisted parsing, the human-computer interaction assisting device 100 acquires, from the executing device 200, a first control instruction that fails to be parsed by the same.

Specifically, referring to FIG. 5, in an embodiment of the present invention, the step S110 comprises the following sub-steps: in sub-step S113, an interactive information between different users, and between a user and the executing device, and between the different executing devices is acquired.

In the present invention an instant communication group is formed, through the network 300, between different users, between a user and the executing device, and between the different executing devices, and the human-computer interaction assisting device 100 acquires an interactive information in this group. Here, the interactive information may be, but is not limited to, a voice information or a text information.

In sub-step S114, the first control instruction contained in the interactive information is parsed and extracted.

The human-computer interaction assisting device 100 sifts out and extracts, from the interactive information, the first control instruction contained therein.

In step S120, the first control instruction is parsed.

Specifically, in the present embodiment, the human-computer interaction assisting device 100 parses the first control instruction by a speech recognition model and/or a semantic analysis model. Here, the speech recognition model includes, but is not limited to, a hidden Markov (HMM) model and an artificial neural network model; the semantic analysis model includes, but is not limited to, a word-dependent (WD) model, a concept-dependent (CD) model, and a core-dependent (KD) model.

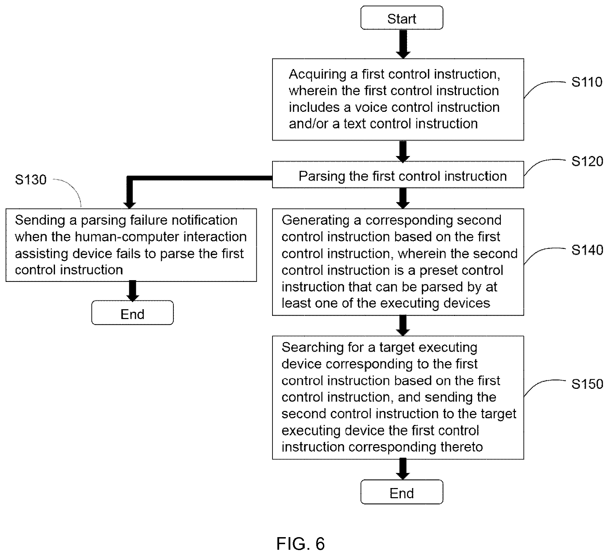

In the first example of the present embodiment, referring to FIG. 6, the method may further comprise step S130.

In step S130, a parsing failure notification is sent when the human-computer interaction assisting device 100 fails to parse the first control instruction.

When the human-computer interaction assisting device 100 fails to parse the first control instruction, a notification of the parsing failure is sent to the user or the user terminal, to prompt the user to re-issue an instruction.

In step S140, a corresponding second control instruction is generated based on the first control instruction, wherein the second control instruction is a preset control instruction that can be parsed by at least one of the executing devices 200.

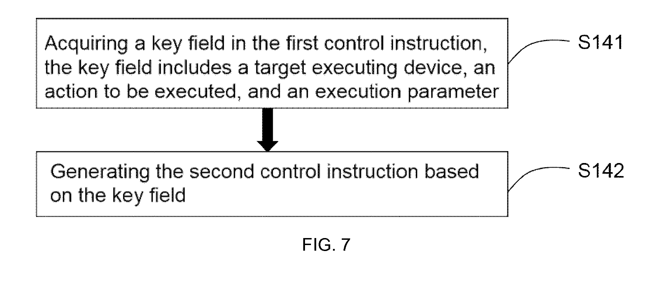

Specifically, referring to FIG. 7, the step S140 may comprise the following sub-steps.

In sub-step S141, a key field in the first control instruction is acquired, where the key field includes, but is not limited to, a target executing device, an action to be executed, and an execution parameter.

In the present embodiment, the human-computer interaction assisting device 100 may set different kinds of extraction of key fields, for different types of executing devices connected thereto (e.g., smart home appliances, smart wearable devices, and remote monitoring cameras, etc.).

In sub-step S142, the second control instruction is generated based on the key field.

The human-computer interaction assisting device 100 generates the second control instruction, which matches the information in the key field, based on the type of a target executing device specified in the key field, using a corresponding instruction format.

In step S150, a search is performed for a target executing device 200 corresponding to the first control instruction based on the first control instruction, and the second control instruction is sent to the target executing device 200 the first control instruction corresponding thereto.

The human-computer interaction assisting device 100 sends the parsed second control instruction to the executing device 200 based on the executing device 200 of the first control instruction.

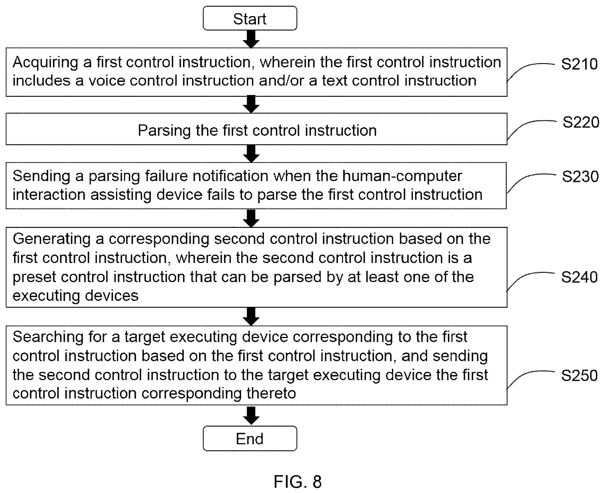

Referring to FIG. 8, the present embodiment further provides a method for assisting human-computer interaction, the method comprises the following steps.

In step S210, the human-computer interaction assisting device 100 acquires a first control instruction, wherein the first control instruction includes a voice control instruction or a text control instruction in a language form.

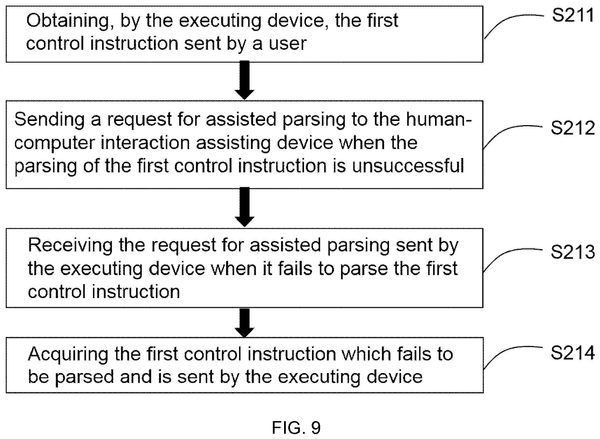

Referring to FIG. 9, in a third example of the present embodiment, the step S210 comprises the following sub-steps:
sub-step S211 of obtaining, by the executing device 200, the first control instruction sent by a user;
sub-step S212 of sending a request for assisted parsing to the human-computer interaction assisting device 100 when the parsing of the first control instruction is unsuccessful;
sub-step S213 of receiving the request for assisted parsing sent by the executing device 200 when it fails to parse the first control instruction; and
sub-step S214 of acquiring the first control instruction which fails to be parsed and is sent by the executing device 200.

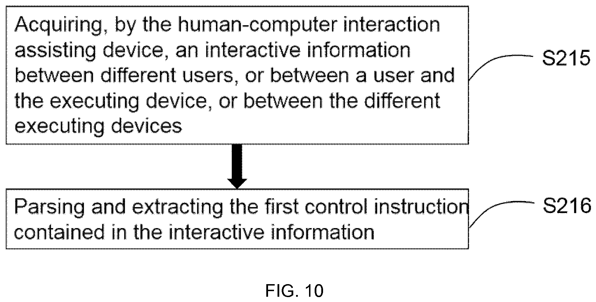

Referring to FIG. 10, in a fourth example of the present embodiment, the step S210 comprises the following sub-steps:
sub-step S215 of acquiring, by the human-computer interaction assisting device 100, an interactive information between different users, or between a user and the executing device 200, or between the different executing devices 200; and
sub-step S216 of parsing and extracting the first control instruction contained in the interactive information.

In step S220, the first control instruction is parsed.

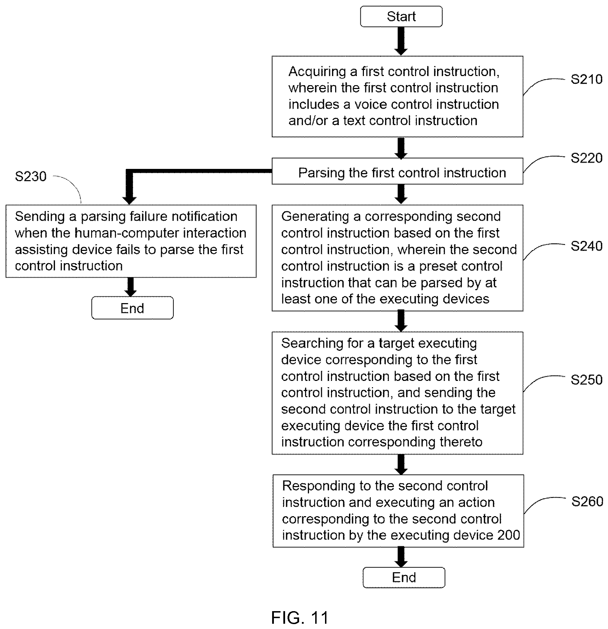

Referring to FIG. 11, in the third example of the present embodiment, the method further comprises step S230.

In step S230, a parsing failure notification is sent to the user and the executing device 200, when the human-computer interaction assisting device 100 fails to parse the first control instruction.

In step S240, a corresponding second control instruction is generated based on the first control instruction, wherein the second control instruction is a preset control instruction that can be parsed by at least one of the executing devices 200.

In step S250, a search is performed for a target executing device 200 corresponding to the first control instruction based on the first control instruction, and the second control instruction is sent to the target executing device 200 the first control instruction corresponding thereto.

In step S260, the executing device 200 responds to the second control instruction, and executes an action corresponding to the second control instruction.

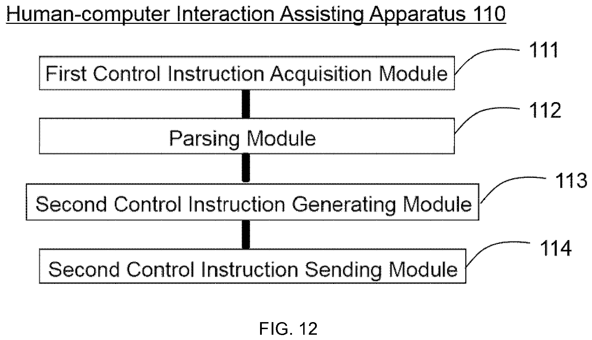

Referring to FIG. 12, the present embodiment further provides a human-computer interaction assisting apparatus 110, which is applied to a human-computer interaction assisting device 100 connected to at least one executing device 200, the apparatus comprises:
a first control instruction acquisition module 111, configured to acquire a first control instruction, wherein the first control instruction includes a voice control instruction and/or a text control instruction;
and a processor configured to execute the method steps of claims 1 and 2.

In summary, in a method and apparatus for assisting human-computer interaction according to the present disclosure, the human-computer interaction assisting device 100, independent from the executing device 200, is disposed, such that the first control instruction that cannot be understood by the executing device 200 is parsed by the human-computer interaction assisting device 100, and a second control instruction that can be understood by the executing device 200 is generated and sent to the executing device 200. In this way, an effect of assisting the executing device 200 in parsing an instruction issued by a user is achieved without increasing investment in improving an information receiving interface or intelligence level of the executing device 200. The method of the present disclosure is simple and easily feasible, effectively saves the cost, and improves the user experience.

The above description is merely illustrative of preferred embodiments of the present disclosure and is not intended to limit the present disclosure, it would be understood by those skilled in the art that various modifications and variations can be made to the present disclosure within the scope of the appended set of claims.

## Claims

1. A method for assisting human-computer interaction, executed by a human-computer interaction assisting device (100) connected to at least one executing device, wherein the method comprises:
acquiring a first control instruction, wherein the first control instruction comprises a voice control instruction and/or a text control instruction;
parsing the first control instruction;
generating a corresponding second control instruction based on the first control instruction, wherein the second control instruction is a preset control instruction that can be parsed by at least one of the at least one executing device;
searching for a target executing device corresponding to the first control instruction based on the first control instruction, and sending the second control instruction to the target executing device the first control instruction corresponding thereto,
**characterized in that** the step of acquiring a first control instruction further comprises:
acquiring an interactive information between different users, or between the different executing devices, wherein the interactive information is acquired in an instant communication group formed between the different users, between the users and the executing devices, and between the different executing devices, through a network formed between the different users, between the users and the executing devices, and between the different executing devices; and
parsing and extracting the first control instruction contained in the interactive information.

2. The method for assisting human-computer interaction according to claim 1, wherein the step of generating a corresponding second control instruction based on the first control instruction comprises:
acquiring a key field in the first control instruction, wherein the key field comprises a target executing device, an action to be executed, and an execution parameter; and
generating the second control instruction based on the key field.

3. An apparatus for assisting human-computer interaction, wherein the apparatus is connected to an executing device, **characterized in that** the apparatus comprises:
a first control instruction acquisition module (111), configured to acquire a first control instruction, wherein the first control instruction comprises a voice control instruction and/or a text control instruction, and
a processor configured to execute the method steps of claims 1 and 2.

## Patentansprüche

1. Verfahren zum Unterstützen einer Mensch-Computer-Interaktion, die von einer Mensch-Computer-Interaktionsunterstützungsvorrichtung (100), die mit mindestens einer ausführenden Vorrichtung verbunden ist, ausgeführt wird, wobei das Verfahren Folgendes umfasst:
Erfassen einer ersten Steueranweisung, wobei die erste Steueranweisung eine Sprachsteueranweisung und/oder eine Textsteueranweisung umfasst;
Parsen der ersten Steueranweisung;
Erzeugen einer entsprechenden zweiten Steueranweisung auf Basis der ersten Steueranweisung, wobei die zweite Steueranweisung eine voreingestellte Steueranweisung ist, die von mindestens einer der mindestens einen ausführenden Vorrichtung geparst werden kann;
Suchen nach einer Zielausführungsvorrichtung, die der ersten Steueranweisung entspricht, auf Basis der ersten Steueranweisung und Senden der zweiten Steueranweisung an die Zielausführungsvorrichtung, wobei die erste Steueranweisung dieser entspricht,
**dadurch gekennzeichnet, dass** eine erste Steueranweisung im Schritt des Erfassens ferner Folgendes umfasst:
Erfassen von interaktiven Informationen zwischen verschiedenen Benutzern oder zwischen den verschiedenen Ausführungsvorrichtungen, wobei die interaktiven Informationen in einer Sofortkommunikationsgruppe, die zwischen den verschiedenen Benutzern, zwischen den Benutzern und den Ausführungsvorrichtungen und zwischen den verschiedenen Ausführungsvorrichtungen gebildet ist, über ein Netzwerk erfasst werden, das zwischen den verschiedenen Benutzern, zwischen den Benutzern und den Ausführungsvorrichtungen und zwischen den verschiedenen Ausführungsvorrichtungen gebildet ist; und
Parsen und Extrahieren der ersten Steueranweisung, die in den interaktiven Informationen enthalten ist.

2. Verfahren zum Unterstützen einer Mensch-Computer-Interaktion nach Anspruch 1, wobei der Schritt des Erzeugens einer entsprechenden zweiten Steueranweisung auf Basis der ersten Steueranweisung Folgendes umfasst:
Erfassen eines Schlüsselfeldes in der ersten Steueranweisung, wobei das Schlüsselfeld eine Zielausführungsvorrichtung, eine auszuführende Aktion und einen Ausführungsparameter umfasst; und
Erzeugen der zweiten Steueranweisung auf Basis des Schlüsselfeldes.

3. Einrichtung zum Unterstützen einer Mensch-Computer-Interaktion, wobei die Einrichtung mit einer Ausführungsvorrichtung verbunden ist, **dadurch gekennzeichnet, dass** die Einrichtung Folgendes umfasst:
ein erstes Steueranweisungserfassungsmodul (111), das dazu ausgelegt ist, eine erste Steueranweisung zu erfassen, wobei die erste Steueranweisung eine Sprachsteueranweisung und/oder eine Textsteueranweisung umfasst, und
einen Prozessor, der dazu ausgelegt ist, die Verfahrensschritte der Ansprüche 1 und 2 auszuführen.

## Revendications

1. Procédé d'assistance à l'interaction homme-machine, exécuté par un dispositif d'assistance à l'interaction homme-machine (100) connecté à un ou plusieurs dispositifs d'exécution, dans lequel le procédé comprend :
l'acquisition d'une première instruction de commande, dans lequel la première instruction de commande comprend une instruction de commande vocale et/ou une instruction de commande textuelle ;
l'analyse syntaxique de la première instruction de commande ;
la génération d'une deuxième instruction de commande correspondante sur la base de la première instruction de commande, dans lequel la deuxième instruction de commande est une instruction de commande prédéfinie qui peut être soumise à une analyse syntaxique par au moins l'un des un ou plusieurs dispositifs d'exécution ;
la recherche d'un dispositif d'exécution cible correspondant à la première instruction de commande sur la base de la première instruction de commande, et l'envoi de la deuxième instruction de commande au dispositif d'exécution cible auquel correspond la première instruction de commande,
**caractérisé en ce que** l'étape d'acquisition d'une première instruction de commande comprend en outre :
l'acquisition d'informations interactives entre des utilisateurs ou entre les différents dispositifs d'exécution, dans lequel les informations interactives sont acquises dans un groupe de communication instantanée formé entre les différents utilisateurs, entre les utilisateurs et les dispositifs d'exécution, et entre les différents dispositifs d'exécution, par l'intermédiaire d'un réseau formé entre les différents utilisateurs, entre les utilisateurs et les dispositifs d'exécution, et entre les différents dispositifs d'exécution ; et
l'analyse syntaxique et l'extraction de la première instruction de commande contenue dans les informations interactives.

2. Procédé d'assistance à l'interaction homme-machine selon la revendication 1, dans lequel l'étape de génération d'une deuxième instruction de commande correspondante sur la base de la première instruction de commande comprend :
l'acquisition d'un champ clé dans la première instruction de commande, dans lequel le champ clé comprend un dispositif d'exécution cible, une action à exécuter et un paramètre d'exécution ; et
la génération de la deuxième instruction de commande sur la base du champ clé.

3. Appareil d'assistance à l'interaction homme-machine, dans lequel l'appareil est connecté à un dispositif d'exécution, **caractérisé en ce que** l'appareil comprend :
un module d'acquisition de première instruction de commande (111), configuré pour acquérir une première instruction de commande, dans lequel la première instruction de commande comprend une instruction de commande vocale et/ou une instruction de commande textuelle, et
un processeur configuré pour exécuter les étapes du procédé des revendications 1 et 2.
